# EUROPÄISCHE PATENTSCHRIFT

(11) **EP 0 730 947 B1**
(45) Veröffentlichungstag und Bekanntmachung des Hinweises auf die Patenterteilung: **29.08.2001**
(21) Anmeldenummer: 96890037.3
(22) Anmeldetag: 06.03.1996
(51) Int. Cl.: B29C 70/86, B29C 70/46, B29C 43/18, B29C 45/14

(54) **Verkleidungsteile aus Faserverbundmatten sowie Verfahren zu deren Herstellung**
Covering elements made of fiber reinforced matts and process for their manufacturing
Eléments de revêtements renforcés, fabriquér à partir d'un mat de fibres et procédé pour leur fabrication

(30) Priorität: 08.03.1995 AT 40895
(43) Veröffentlichungstag der Anmeldung: 11.09.1996
(73) Patentinhaber: Magna Eybl Ges.m.b.H., 2435 Ebergassing (AT)
(72) Erfinder: Steiner Karl, Ing., A-2435 Ebergassing (AT); Hahnekamp Richard, Ing., A-7000 Eisenstadt (AT); Bitterhof, Gebhard Ing., A-2435 Wienerherberg (AT)
(74) Vertreter: Kovac, Werner, Dipl.-Ing.

(56) Entgegenhaltungen:
- EP-A- 0 137 125
- EP-A- 0 492 532
- EP-A- 0 547 625
- US-A- 3 096 958
- US-A- 4 418 031

## Beschreibung

Die Erfindung betrifft ein Verfahren zur Herstellung von Verkleidungsteilen aus Faserverbundmatten, vorzugsweise für den Innenraum von Kraftfahrzeugen, wobei eine entsprechend erwärmte Faserverbundmatte ggf. gemeinsam mit einem die Sichtseite darstellenden Dekormaterial durch Faserpressen zu einem Verkleidungsteil verformt wird, wobei auf der Rückseite des Verkleidungsteiles vorgesehene Anbauteile, wie z. B. Versteifungsrippen, Befestigungselemente, Halterungen etc., im selben Werkzeug durch einen thermoplastisch verarbeitbaren Kunststoff angeformt werden, sowie nach dem erfindungsgemäßen Verfahren hergestellte Verkleidungsteile.

Komplexe Verkleidungsteile, wie sie z. B. im Innenraum von Kraftfahrzeugen eingebaut werden, bestehen meist aus Kunststoffen. In letzter Zeit haben diverse heiß verpreßbare und verformbare Faserverbundmatten, insbesondere Naturfasermatten, über Verkleidungsteile Einzug in die Automobilindustrie gehalten. Da derartige Verkleidungsteile problemlos wiederverwertbar sind, ist mit großen Zuwachszahlen für diese Materialien zu rechnen.

Zur Erhöhung des optischen Eindruckes und des Komforts werden Verkleidungsteile aus Kunststoff immer öfter mit textiler oder anders dekorierter Oberfläche hergestellt. Dekorierte Verkleidungsteile werden entweder über sogenannte Direktverfahren oder über zweistufige Verfahren produziert.

Bei einem zweistufigen Verfahren wird zuerst ein Formkörper inklusive allfälliger konstruktiver Anbauelemente gefertigt und anschließend in einem getrennten Arbeitsgang mit einem Dekor versehen. Das Aufbringen eines Dekors auf einen Formkörper wird allgemein als Kaschieren bezeichnet. Die Haftung zwischen Dekor und Formkörper wird durch unterschiedliche Klebersysteme gewährleistet.

Unter Direktverfahren versteht man solche, bei welchen ein dekorierter Verkleidungsteil in einem Arbeitsschritt und ohne Verwendung von Klebstoffen hergestellt wird. Dabei wird die Schmelze eines thermoplastisch verarbeitbaren Kunststoffes gemeinsam mit einer Dekorschicht geformt. Die gängigsten Direktverfahren sind Hinterspritzen und Hinterpressen. Beim Hinterspritzen wird die Dekorschicht in ein Formteil eines Spritzwerkzeuges eingelegt und der Kunststoff bei geschlossenem Spritzwerkzeug an der Rückseite des Dekors eingebracht. Beim Hinterpressen wird der Kunststoff bei geöffnetem Spritzwerkzeug, beispielsweise durch eine Breitschlitzdüse, in die Kavität eines Werkzeuges eingebracht und danach gemeinsam mit der Dekorschicht verpreßt, wobei der Kunststoff die Kavität zwischen den beiden Werkzeughälften ausfüllt.

Beim Verarbeiten von Faserverbundmatten bzw. von Naturfaserverbundmaterialien, dem sogenannten Faserpressen, wird eine entsprechend erwärmte Fasermatte, bestehend z. B. aus Polypropylen und Flachsfasern (teils mehrlagig mit unterschiedlichen Faseranteilen) gemeinsam mit dem Dekormaterial oder der Dekorschicht verformt, wobei auch ohne Klebstoff ein fester Zusammenhalt zwischen Faserverbundmatte als Grundkörper und der Dekorschicht als Obermaterial entsteht. Als Naturfasern kommen weiters z. B. Hanf-, Sisal-, Jute-, Zellstoff- und Baumwollprodukte in Frage sowie Holzschliff. Denkbar wäre auch der Zusatz von Synthetikfasern. Für Verkleidungsteile mit erhöhter Festigkeit können auch Glas- oder Kohlefasern zugesetzt werden.

Anformteile oder Anbauelemente, wie z. B. Befestigungselemente, Halterungen oder auch Versteifungsrippen, müssen entweder in einem weiteren Arbeitsschritt auf die Faserverbundmatte aufgeklebt werden oder können auch als vorgefertigte Metallteile während des Verformprozesses eingepreßt werden. Dazu muß das Preßwerkzeug jedoch vor jedem Arbeitshub mit den entsprechenden Anbauteilen bestückt werden. Weiters sind komplexe Anbauteile auf diese Art nicht darstellbar.

Aus der EP-A 0 547 625 ist in diesem Zusammenhang ein Verfahren zur Herstellung von Verkleidungsteilen aus Faserverbundmatten bekannt geworden, wobei eine entsprechend erwärmte Faserverbundmatte durch Faserpressen zu einem Verkleidungsteil verformt wird. Auf der Rückseite des Verkleidungsteiles vorgesehene Anbauelemente (beispielsweise Versteifungsrippen) können im selben Werkzeug durch Hinterspritzen von thermoplastisch verarbeitbaren Kunststoffen angeformt werden. Weiters kann im Preßwerkzeug eine Dekorschicht auf die Sichtseite der Faserverbundmatte laminiert werden.

Aus der US-A 3 096 958 ist die Herstellung eines Formteiles aus einer Faserverbundmatte bekannt geworden, welcher Versteifungsrippen angeformt hat. Das dazu benötigte Preßwerkzeug ist im wesentlichen dreiteilig aufgebaut, wobei im Oberteil des Preßwerkzeuges eine Aussparung für die Versteifungsrippe angeordnet ist. Am oberen Ende der Aussparung befindet sich eine flache Mulde in welcher die Formmasse für die Versteifungsrippe eingebracht wird. Bei geschlossenem Ober- und Unterteil des Preßwerkzeuges wird durch einen, in seiner äußeren Kontur der flachen Mulde entsprechenden Stempel die Formmasse in die Aussparung eingebracht und die Versteifungsrippe angeformt.

Aufgabe der vorliegenden Erfindung ist es, Verkleidungsteile aus Faserverbundmatten sowie ein Verfahren zu deren Herstellung derart weiterzubilden, daß der Arbeitsaufwand zur Anbringung und Verankerung von Anbauteilen minimiert wird, wobei auch konstruktiv aufwendige Anbauteile problemlos dargestellt werden sollen.

Diese Aufgabe wird erfindungsgemäß dadurch gelöst, daß die Faserverbundmatte durch Schließen des Preßwerkzeuges zunächst im wesentlichen bis zur endgültigen Form des Verkleidungsteiles verformt wird, daß bei halbgeöffnetem Preßwerkzeug zumindest in den zur Darstellung der Anbauteile vorgesehenen Bereichen thermoplastisch verarbeitbarer Kunststoff eingebracht wird und die Anbauteile sowie zumindest rund um die Anbauteile inselartige Bereiche durch nochmaliges Schließen des Preßwerkzeuges hinterpreßt werden.

Durch das erfindungsgemäße Verfahren gewinnt man ein Verkleidungsteil, bestehend aus einer durch Faserpressen verformten Faserverbundmatte, welche ggf. auf der Sichtseite mit einem Dekormaterial versehen ist, wobei auf der Rückseite der verformten Faserverbundmatte beliebig Anbauteile angeordnet sind, welche durch Hinterpressen von thermoplastisch verarbeitbaren Kunststoffen direkt an der Rückseite der Faserverbundmatte angeformt sind, wobei erfindungsgemäß die Rückseite des Verkleidungsteiles zumindest in inselartigen Bereichen rund um die Anbauteile hinterpreßt ist und die inselartigen Bereiche im wesentlichen die gesamte Rückseite des Verkleidungsteiles bedecken.

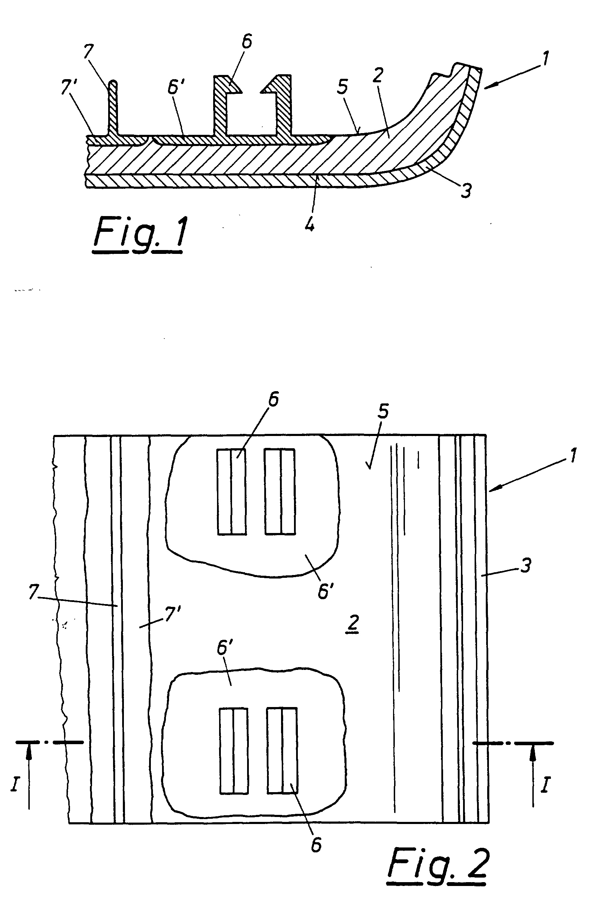

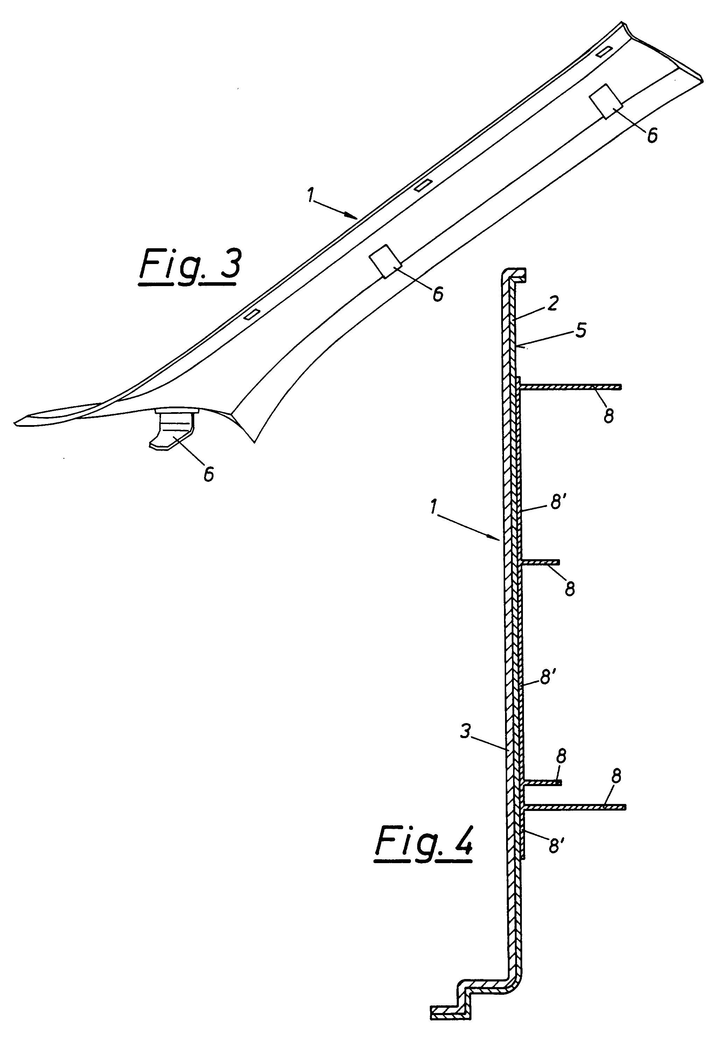

Die Erfindung wird im folgenden anhand von Zeichnungen näher erläutert. Es zeigen Fig. 1 einen Schnitt durch ein schematisch dargestelltes Verkleidungsteil gemäß der Erfindung, Fig. 2 eine Draufsicht auf die Rückseite des Verkleidungsteiles gemäß Fig. 1 sowie die Fig. 3 und 4 konkrete Anwendungsbeispiele von Verkleidungsteilen für den Innenraum von PKWs.

Das in den Fig. 1 und 2 schematisch dargestellte Verkleidungsteil 1, beispielsweise ein Deckel in der Kofferraumauskleidung eines Kraftfahrzeuges, ist wie aus der Schnittdarstellung in Fig. 1 ersichtlich, aus einer durch Faserpressen verformten Faserverbundmatte 2 und einer im gleichen Arbeitsgang angeformten Dekorschicht 3 aufgebaut. Die Sichtseite 4 der Faserverbundmatte kann jedoch auch teilweise oder zur Gänze undekoriert bleiben.

Auf der Rückseite 5 der Faserverbundmatte 2 sind Anbauteile 6 und 7 angeordnet, welche durch Hinterpressen von thermoplastisch verarbeitbaren Kunststoffen an der Faserverbundmatte 2 angeformt sind. Mit dem Bezugszeichen 6 wird ein Befestigungselement und mit 7 eine Versteifungsrippe bezeichnet.

Zur besseren Anbindung an die Faserverbundmatte 2 kann die Rückseite 5 des Verkleidungsteiles 1 zumindest in inselartigen Bereichen 6', 7' rund um die Anbauteile 6, 7 hinterpreßt sein. Diese inselartigen Bereiche 6', 7' können insbesondere bei kleinen Verkleidungsteilen die gesamte Rückseite der Faserverbundmatte 2 bedecken.

In den Fig. 3 und 4 sind konkrete Anwendungsbeispiele für derartige Verkleidungsteile dargestellt. Fig. 3 zeigt die Innenverkleidung einer B-Säule eines PKWs in einer dreidimensionalen Darstellung. Mit 6 sind die Befestigungselemente der Säulenverkleidung bezeichnet.

Fig. 4 ist eine Schnittdarstellung einer Abdeckung eines Seitenfaches im Kofferraum eines PKWs, welche Halterungen 8, beispielsweise zur Aufnahme eines Warndreieckes und eines Verbandkastens, zeigt. Die inselartigen Bereiche 8' bedecken bei dieser Seitenfachabdeckung große Bereiche der Rückseite 5.

## Patentansprüche

1. Verfahren zur Herstellung von Verkleidungsteilen (1) aus Faserverbundmatten (2), vorzugsweise für den Innenraum von Kraftfahrzeugen, wobei eine entsprechend erwärmte Faserverbundmatte (2) ggf. gemeinsam mit einem die Sichtseite darstellenden Dekormaterial (3) durch Faserpressen zu einem Verkleidungsteil (1) verformt wird, wobei auf der Rückseite (5) des Verkleidungsteiles (1) vorgesehene Anbauteile (6, 7, 8), wie z. B. Versteifungsrippen, Befestigungselemente, Halterungen etc., im selben Werkzeug durch einen thermoplastisch verarbeitbaren Kunststoff angeformt werden, **dadurch gekennzeichnet,** daß die Faserverbundmatte (2) durch Schließen des Preßwerkzeuges zunächst im wesentlichen bis zur endgültigen Form des Verkleidungsteiles (1) verformt wird, daß bei halbgeöffnetem Preßwerkzeug zumindest in den zur Darstellung der Anbauteile (6, 7, 8) vorgesehenen Bereichen thermoplastisch verarbeitbarer Kunststoff eingebracht wird und die Anbauteile (6, 7, 8) sowie zumindest rund um die Anbauteile (6, 7, 8) inselartige Bereiche (6', 7', 8') durch nochmaliges Schließen des Preßwerkzeuges hinterpreßt werden.

2. Verkleidungsteil (1), bestehend aus einer durch Faserpressen verformten Faserverbundmatte (2), welche ggf. auf der Sichtseite mit einer Dekorschicht (3) versehen ist, vorzugsweise für den Innenraum von Kraftfahrzeugen, wobei auf der Rückseite (5) der verformten Faserverbundmatte (2) Anbauteile (6, 7, 8), wie z. B. Versteifungsrippen, Befestigungselemente, Halterungen etc., angeordnet sind, welche mit Hilfe eines thermoplastisch verarbeitbaren Kunststoffes direkt an der Rückseite (5) der Faserverbundmatte (2) angeformt sind, **dadurch gekennzeichnet,** daß die Rückseite (5) des Verkleidungsteiles (1) zumindest in inselartigen Bereichen (6', 7', 8') rund um die Anbauteile (6, 7, 8) hinterpreßt ist und die inselartigen Bereiche im wesentlichen die gesamte Rückseite des Verkleidungsteiles bedecken.

## Claims

1. A method of producing lining parts (1) from fibre composite mats (2), preferably for the interior of motor vehicles, wherein a suitably heated fibre composite mat (2), optionally jointly with a decorative material (3) constituting the visible side, is deformed by fibre pressing into a lining part (1), wherein any attachable parts (6, 7, 8) such as reinforcing ribs, fixing elements, holding elements, etc. provided on the reverse side (5) of the lining part (1) are formed on in the same tool from thermoplastically processable plastics,
**characterised in**
**that**, by closing the pressing tool, the fibre composite mat (2) is initially substantially deformed until the final shape of the lining part (1) has been achieved, that, with the pressing tool in the semi-opened position, thermoplastically processable plastics are introduced into the regions provided for producing the attachable parts (6, 7, 8) and that the attachable parts (6, 7, 8) as well as island-like regions (6,' 7', 8') arranged at least around the attachable parts (6, 7, 8) are subjected to back-pressing by again closing the pressing tool.

2. A lining part (1) consisting of a fibre composite mat (2) which is deformed by fibre pressing and which is optionally provided with a decorative layer (3) on the visible side, preferably for the interior of motor vehicles, wherein the reverse side (5) of the deformed fibre composite mat (2) is provided with attachable parts (6, 7, 8) such as reinforcing ribs, fixing elements, holding elements etc which, by means of thermoplastically processable plastics, are directly formed on to the reverse (5) of the fibre composite mat (2),
**characterised in**
**that** the reverse side (5) of the lining part (1), at least in island-like regions (6', 7', 8') around the attachable parts (6, 7, 8), is subjected to back-pressing and that the island-like regions substantially cover the entire reverse side of the lining part.

## Revendications

1. Procédé de fabrication de pièces d'habillage (1) constituées de mats composites (2) renforcés par des fibres, de préférence pour l'espace intérieur de véhicules, dans lequel un mat composite (2) renforcé par des fibres chauffé de façon appropriée, le cas échéant avec un matériau décoratif (3) exposé du côté visible, est mis en forme en pressant les fibres pour obtenir une pièce d'habillage (1), des pièces auxiliaires (6,7,8) prévues au dos (5) de la pièce d'habillage (1), comme par exemple des nervures de renfort, des éléments de fixation, des attaches etc, étant conformées dans le même outil à partir d'une matière thermoplastique, **caractérisé en ce que** le mat composite (2) par des fibres est mis en forme en serrant tout d'abord l'outil de pressage sensiblement jusqu'à obtenir la forme finale de la pièce d'habillage (1), en ce que, lorsque l'outil de pressage est semi-ouvert, de la matière thermoplastique est apportée au moins dans les zones prévues pour réaliser les pièces auxiliaires (6,7,8), et les pièces auxiliaires (6,7,8) ainsi qu'au moins des régions (6',7',8') se présentant sous forme d'îlots et agencées circulairement autour des pièces auxiliaires (6,7,8) sont ensuite pressées en fermant à nouveau l'outil de pressage.

2. Pièce d'habillage (1), constituée d'un mat composite (2) renforcé par des fibres et mis en forme en pressant les fibres, lequel mat est doté le cas échéant d'une couche décorative (3) du côté visible, de préférence pour l'espace intérieur de véhicules, des pièces auxiliaires (6,7,8), comme par exemple des nervures de renfort, des éléments de fixation, des attaches etc., étant agencées au dos (5) du mat composite (2) renforcé par des fibres, lesquelles pièces auxiliaires sont mises en forme directement au dos (5) du mat composite (2) renforcé par des fibres à partir d'une matière thermoplastique, **caractérisé en ce que** le dos (5) de la pièce d'habillage (1) est ensuite pressé au moins dans des zones (6',7',8') se présentant sous forme d'îlots et agencées circulairement autour des pièces auxiliaires (6,7,8), et les zones se présentant sous forme d'îlots recouvrent sensiblement tout le dos de la pièce d'habillage.
